# EUROPÄISCHE PATENTSCHRIFT

(11) **EP 1 428 612 B1**
(45) Veröffentlichungstag und Bekanntmachung des Hinweises auf die Patenterteilung: **15.06.2005**
(21) Anmeldenummer: 03028178.6
(22) Anmeldetag: 08.12.2003
(51) Int. Cl.: B23Q 1/76, B24B 41/06, B24B 5/42, B23B 5/18

(54) **Vorrichtung und Verfahren zum Ausrichten der Winkellage von exzentrischen Teilen wie Kurbelwellen mittels Richtbacken an einer Lünette**
Device and method for the angular positioning of eccentric workpieces such as crankshafts, by means of indexing jaws on a steady rest
Dispositif et procédé de positionnement angulaire de pièces excentriques telles que des villebrequins, par l'intermédiaire de mâchoires montées sur une lunette de centrage

(30) Priorität: 09.12.2002 DE 10257448; 01.07.2003 DE 10329677
(43) Veröffentlichungstag der Anmeldung: 16.06.2004
(73) Patentinhaber: BOEHRINGER WERKZEUGMASCHINEN GmbH, D-73033 Göppingen (DE)
(72) Erfinder: Hilgarth, Bernd, 73728 Esslingen (DE); Billerbeck, Martin, 73760 Ostfildern (DE)
(74) Vertreter: Alber, Norbert, Dipl.-Ing.

(56) Entgegenhaltungen:
- EP-A- 1 342 536
- DE-A- 4 410 387
- US-A- 3 006 118
- US-B1- 6 257 972

## Beschreibung

### I. Anwendungsgebiet

Die Erfindung betrifft eine Positioniervorrichtung gemäss dem Oberbegriff des Anspruchs 1 für Werkstücke in Werkzeugmaschinen, nämlich zum Positionieren der richtigen Drehlage dieses Werkstückes bezüglich der Werkzeugmaschine, insbesondere deren Werkstückaufnahme, in der Regel einem Dreibacken-Spannfutter (siehe, z.B., US-3,006,118-A).

### II. Technischer Hintergrund

Das Problem der Positionierung der Drehlage des Werkstückes relativ zur Werkzeugmaschine tritt insbesondere bei Bearbeitungsverfahren bzw. Werkzeugmaschinen auf, bei denen das Werkstück entweder während der Bearbeitung oder zwischen den einzelnen Bearbeitungsschritten um seine Achse verschwenkt wird und nicht vollständig rotationssymmetrisch bezüglich dieser Längsachse ausgebildet ist.

Ein typisches Beispiel hierfür ist das Bearbeiten von Kurbelwellen einschließlich deren exzentrischer Hublagerzapfen als Werkstücke, die beispielsweise auf ihrer Hauptlagerachse in der Werkzeugmaschine eingespannt und mittels z. B. Fräsen oder Dreh-Drehräumen bearbeitet werden und deshalb die Werkzeugmaschine auch eine C-Achse, also eine hinsichtlich des Drehwinkels um die Z-Richtung steuerbare Achse, besitzt.

Damit die C-Achse benutzt werden kann und die exzentrischen Hublager bearbeitet werden können, muss die Kurbelwelle beim Einspannen in die Maschine, also in die Spannfutter, zunächst einmal eine definierte Drehlage einnehmen.

Zu diesem Zweck war es bisher bekannt, die Kurbelwelle zunächst nur grob positioniert in das Spannfutter und zwischen Spitzen in der Hauptlagerachse aufzunehmen, die genaue Drehlage mittels Richtbacken zu bewirken und anschließend zu spannen. Das Ausrichten erfolgte unter Zuhilfenahme von speziellen Richtflächen an den Wangen oder an einer der Hublagerstellen, an der die Richtbacken angriffen und diese Stelle beim Schließen der Richtbacken in eine bestimmte Winkelposition, nämlich die festgelegte definierte Position, drückten.

Zu diesem Zweck waren beide Richtbacken, zwischen denen eine solche Hublagerstelle aufgenommen wurde, beweglich, oder ein Richtbacken war - in Querrichtung zu der Z-Achse - beweglich, und drückte die Richtfläche oder den bearbeiteten Hublagerzapfen gegen einen festen Richt-Anschlag.

Dabei war von den - meist speziell vorstehend angegossenen - Richtflächen nur eine plan vorbearbeitet, nämlich die gegen den festen Richtanschlag zu drückende Fläche, während die andere Richtfläche im unbearbeiteten Zustand ausreichte als Ansatzpunkt zum Anlegen des zweiten Richtbackens.

Der Vorteil der speziellen Richtfläche an der Wange gegenüber der Verwendung eines (vorbereiteten oder noch unbearbeiteten) Hublagerzapfens liegt darin, dass eine separate Richtfläche an der Wange als Referenzfläche während der restlichen Bearbeitung der Kurbelwelle erhalten bleibt, und nicht wie bei einem zunächst unbearbeiteten Hublagerzapfen als Richtfläche später beseitigt wird, so dass dann keine Referenzfläche mehr vorhanden ist, nach der die restliche Bearbeitung ausgerichtet werden kann, und beim Überwechseln auf eine demgegenüber andere Referenzfläche Ungenauigkeiten eventuell in Kauf genommen werden müssen.

Die Richtbacken waren dabei entweder als separate Ausrichteeinheit an der Maschine vorhanden oder - sofern dies aus Platzgründen nicht möglich war oder die spätere Bearbeitung erschwerte - direkt in die Spannfutter integriert.

Letzteres hatte den Nachteil, dass eine solche im Futter integrierte Lösung eine relativ große Erstreckung des Futters in Z-Richtung bewirkt, speziell bei Richtbacken, die das Hublager zum Ausrichten verwenden und demzufolge axial rückziehbar gestaltet sein müssen, was es schwieriger macht, eine stabile Spannung des Werkstückes zu erzielen. Auch das durch die Ausrichteeinheit höhere Gewicht des Futters, welches ja mit dem Werkstück mitrotiert und daher je nach Bearbeitungsverfahren sehr hohe Drehzahlen erreicht, wird dadurch erhöht, und dadurch das Risiko einer Umwuchtigkeit des Futters.

Dies ist besonders nachteilig bei Werkzeugmaschinen, auf denen das Werkstück nicht nur - unter Einsatz der C-Achse - gefräst werden, sondern auch Drehbearbeitungsschritte durchgeführt werden, bei denen das Werkstück und damit auch die Futter hohe Drehzahlen erreichen.

### III. Darstellung der Erfindung

### a) Technische Aufgabe

Es ist daher die Aufgabe gemäß der Erfindung, eine Positioniervorrichtung bzw. eine Werkzeugmaschine mit einer Positioniervorrichtung zu schaffen, die trotz einfachem und in Z-Richtung kurzem Maß der Spannfutter den Aufwand einer zusätzlichen separaten Positioniervorrichtung vermeidet.

### b) Lösung der Aufgabe

Diese Aufgabe wird durch die Merkmale des Anspruches 1,11 und 12 gelöst. Vorteilhafte Ausführungsformen ergeben sich aus den Unteransprüchen.

Bei Werkzeugmaschinen, insbesondere bei Drehmaschinen oder Fräsmaschinen, sind Lünetten bekannt, und auch als Zukaufteile zu einem günstigen Preis zu erhalten.

Derartige Lünetten sind meist so ausgebildet, dass sie auf dem Maschinenbett montiert sind, meist unterhalb des Werkstückes, und von einem Sockel aus mit zwei gegeneinander verschwenkbaren Armen zum Werkstück ragen, die gegeneinander verschwenkt werden können und dabei das Werkstück, bei einer Kurbelwelle meist eines der Mittellager der Kurbelwelle, zwischen sich aufnehmen.

Die an den freien Enden der Arme angeordneten Stützbacken greifen dabei in der Regel nicht diametral einander gegenüberliegend an der Stützstelle an, sondern sind im geschlossenen Zustand bezüglich der Mittelachse der Stützstelle um nur 120° beabstandet, während ein dritter Stützstempel, vom Sockel der Lünette aus gegen die Stützstelle vorgefahren und an dieser ebenfalls angelegt werden kann als dritte Stützbacke, die dann um 120° zueinander versetzt am Werkstück angreifen.

Bei Verfahren, bei denen das Werkstück nicht oder nur langsam dreht, sind die Stützbacken als Preßflächen bzw. Gleitflächen ausgebildet, so dass Gleitreibung zwischen den Stützbacken und dem Werkstück auftritt. Bei Verfahren, bei denen das Werkstück schnell rotiert, sind die Stützbacken häufig als Gleitrollen bzw. Gleitrollen-Paare ausgebildet, da ja die Lünette nicht mit dem Werkstück mitdreht.

Erfindungsgemäß sind die Richtbacken ebenfalls an der Lünette, insbesondere deren verschwenkbaren Lünetten-Armen, ausgebildet, wodurch die Lünette eine Doppelfunktion als Stütz- und Positioniervorrichtung erhält.

Da die zum Positionieren benutzte Stelle des Werkstückes meist in Z-Richtung beabstandet von der Stützstelle für die Lünette ist, beispielsweise bei einer Kurbelwelle als Werkstück ein Hublagerzapfen oder eine Wange anstelle eines Hauptlagerzapfens, ist die Lünette für die Doppelfunktion vorzugsweise entweder in Z-Richtung verfahrbar gegenüber der Werkzeugmaschine oder die Richtbacken sind gegenüber den Stützbacken zusätzlich in Z-Richtung versetzt.

Darüber hinaus sind die Richtbacken natürlich auch in Querrichtung zur Z-Richtung gegenüber den Stützbacken an den Lünettenarmen versetzt, da ja die Stützbacken in der Regel an einem zentrischen Teil des Werkstückes angreifen, die Richtbacken dagegen an einem exzentrischen Teil.

Bei einer Kurbelwelle stehen hierfür zwei unterschiedliche Drehlagen zum Ausrichten zur Verfügung:

Entweder greifen die Richtbacken an einem z. B. Hublagerzapfen oder einer Wangenfläche an, die bezüglich der Hauptlagerachse der Kurbelwelle in Richtung des Sockels, also der Schwenkpunkte, der Lünettenarme zwischen die Lünettenarme hinein vorsteht. In diesem Fall befinden sich die Richtbacken an den Lünettenarmen zwischen den Stützbacken und den Schwenkpunkten der Lünettenarme, jeweils wiederum gegeneinander gerichtet, um den z. B. Hublagerzapfen zwischen sich aufzunehmen, und dabei vorzugsweise bezüglich des Hublagerzapfens diametral gegenüber.

Die andere Möglichkeit besteht darin, dass ein solcher Hublagerzapfen oder dorthin führende Wangenflächen in einer bezüglich der Lünette gegenüberliegenden Drehlage von den Richtbacken gegriffen werden, was die bevorzugte Ausführungsform aus mehreren Gründen ist:

Zum einen können für die diesen Anwendungsfall bereits existierenden Lünettenarme über ihr bisheriges freies Ende hinaus verlängert werden durch Aufschrauben von Zusatzteilen, die auch die Richtbacken enthalten. Zum anderen können dabei die Richtbacken bezüglich des Hublagerzapfens diametral einander gegenüberliegend, also mit einem Zwischenwinkel von 180°, angeordnet werden, so dass nur die beiden Richtbacken in der Ausrichtposition am z. B. Hublagerzapfen angreifen, nicht jedoch der - funktional in der Regel mit dem Schließen der Lünettenarme gekoppelte - dritte Lünettenstempel ebenfalls diesen Hublagerzapfen erreicht, aufgrund der hierfür nicht ausreichenden Länge.

Bei der zuerst beschriebenen Lösung dagegen muss entweder das Ausfahren dieses dritten Lünettenstempels funktional von der Bewegung der Lünettenarme entkoppelt werden oder auch die Richtbacken müssen nicht diametral einander gegenüberliegend bezüglich des Hublagerzapfens angeordnet werden, sondern - wie die Stützbacken auch ― um nur 120° Zwischenwinkel versetzt angeordnet werden, um zusammen mit dem ebenfalls am Hublagersatz bzw. der Richtstelle angreifenden dritten Lünettenstempel zusammen drei Anpressflächen um 120° zueinander zu schaffen.

Zusätzlich drohen bei der erstbeschriebenen Lösung Kollisionen mit anderen Komponenten der Werkzeugmaschine oder des Werkstückes während der Bearbeitung.

Dabei ist zu berücksichtigen, dass Lünetten in unterschiedlichen Bauformen existieren: die Koppelung der Lünettenarme kann mechanisch erfolgen, so dass Ausgangsposition und zurückgelegter Winkel und auch die Endposition beider Lünettenarme immer einander entsprechen, oder die Ansteuerung der beiden an sich unabhängigen Lünettenarme kann über Hydraulikzylinder geschehen, die vom gleichen Arbeitsdruck gespeist werden.

Dies ist vor allem bedeutsam für den Fall, dass die Kurbelwelle exzentrisch mit einer Richtfläche, z.B. ausgebildet an einer Wange, gegen einen Richtanschlag gedrückt werden soll. Ein solcher einseitiger Richtanschlag kann entweder an der Lünette, also der Basis für die Lünettenarme, oder direkt an einem der Lünettenarme ausgebildet sein. Bei Ausbildung an der Lünettenbasis kann der Festanschlag durch entweder Querverschiebung in X-Richtung oder auch ausschließlich durch Längsverschiebbarkeit der Lünettenbasis in Z-Richtung in den Wirkungsbereich der Richtfläche gelangen.

Falls die Anschlagfläche dagegen an einem der Lünettenarme ausgebildet ist, muss dieser Lünettenarm seinerseits in einer definierten Position haltbar sein, beispielsweise indem der Lünettenarm in der Richtposition selbst seinerseits gegen einen Primäranschlag gedrückt gehalten wird. Dieser Primäranschlag kann auch ein von dem Werkstück abgewandter Anschlag sein. Hierfür ist jedoch eine mechanische Entkopplung der beiden Lünettenarme notwendig.

Bei Kopplung über den Versorgungsdruck muss dagegen sichergestellt werden, dass der Lünettenarm, welcher die Anschlagfläche trägt, so stark gegen einen Primäranschlag gepresst wird, dass die Gegenkraft durch den anderen Lünettenarm über das Werkstück diese Anpressung nicht aufheben kann. Durch entsprechende Gestaltung der Hydraulik, insbesondere der Ventilgrößen und/oder Kolbendurchmesser der Lünette ist dies möglich.

Bei mechanischer Kopplung der Lünettenarme wird diese für das Ausrichten der Kurbelwelle aufgehoben.

Die Richtbacken sind dabei vorzugsweise gegenüber den Lünettenarmen einstellbar, und zwar sowohl in ihrer Position in Erstreckungsrichtung bezüglich der Lünettenarme als auch quer hierzu als auch in ihrer Winkelstellung zu den Lünettenarmen und/oder in ihrer Z-Position bezüglich der Lünettenarme.

In einer bevorzugten Ausführungsform sind die Richtbacken um eine Achse parallel zur Z-Richtung und/oder eine Achse quer hierzu verschwenkbar an den Lünettenarmen gelagert und dadurch selbstzentrierend bezüglich der Richtstelle, also z. B. dem Hublagerzapfen.

### c) Ausführungsbeispiele

Eine Ausführungsform gemäß der Erfindung ist im Folgenden anhand der Figuren beispielhaft näher beschrieben. Es zeigen:
- Fig. 1:: Positioniervorrichtungen in unterschiedlichen Zuständen,
- Fig. 2:: die Werkzeugmaschine im Bearbeitungszustand,
- Fig. 3:: die Werkzeugmaschine im Ausrichte-Zustand,
- Fig. 4:: Positioniervorrichtungen in anderen Zuständen als der Fig. 1, und
- Fig. 5:: eine Werkzeugmaschine beim Einnehmen des Ausrichtezustandes.

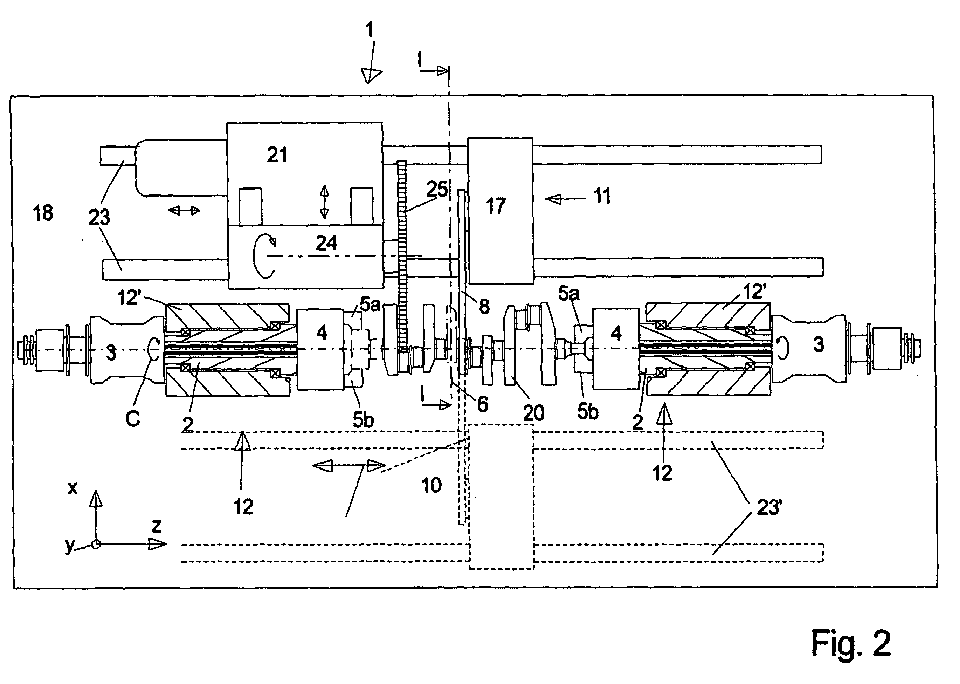

Dabei zeigt Fig. 2 - bis auf die Ausformung der Lünette 11 - einen konventionellen Bearbeitungszustand der Werkzeugmaschine:

Eine Kurbelwelle ist als Werkstück 20 auf ihrer Mittellagerachse mit den beiden Enden jeweils zwischen den Spannbacken 5a, b ... eines drehend antreibbaren Spannfutters der Werkzeugmaschine gespannt, wobei sich die Spannfutter jeweils auf dem Kopf eines von zwei gegeneinander gerichteten, Spindelstöcken 12 befinden.

Parallel zur Längsrichtung 10, der Z-Richtung, des so eingespannten Werkstückes 20 ist mindestens ein Längsschlitten 21 entlang von Längsführungen 23 des Bettes 18 der Maschine verfahrbar. Auf dem Längsschlitten 21 ist ein Querschlitten 24 in X-Richtung verfahrbar aufgesetzt, der ein Werkzeug trägt, in diesem Fall einen um eine Parallele zur Z-Achse drehend antreibbaren Scheibenfräser 25, der den Außenumfang eines Hublagerzapfens H1 fräst. Dabei dreht sich das Werkstück 20 langsam um seine C-Achse, während der Scheibenfräser 25 mittels des Querschlittens 24 dementsprechend in der Querrichtung hierzu, also der X-Richtung, nachgeführt wird.

Um dabei ein Verbiegen des Werkstückes 20 aufgrund der Bearbeitungskräfte zu verhindern bzw. zu minimieren, wird die Kurbelwelle an einem der benachbarten Mittellager ML von einer Lünette 11 gestützt. Die Arme 8 der Lünette, welche diese Abstützung bewirken, sind ihrerseits an einem Sockel 17 angeordnet, der ebenfalls in Z-Richtung entweder entlang der Führungen 23 oder entlang von speziellen Lünetten-Längsführungen 23', die unter dem Werkstück verlaufen, verfahrbar ist.

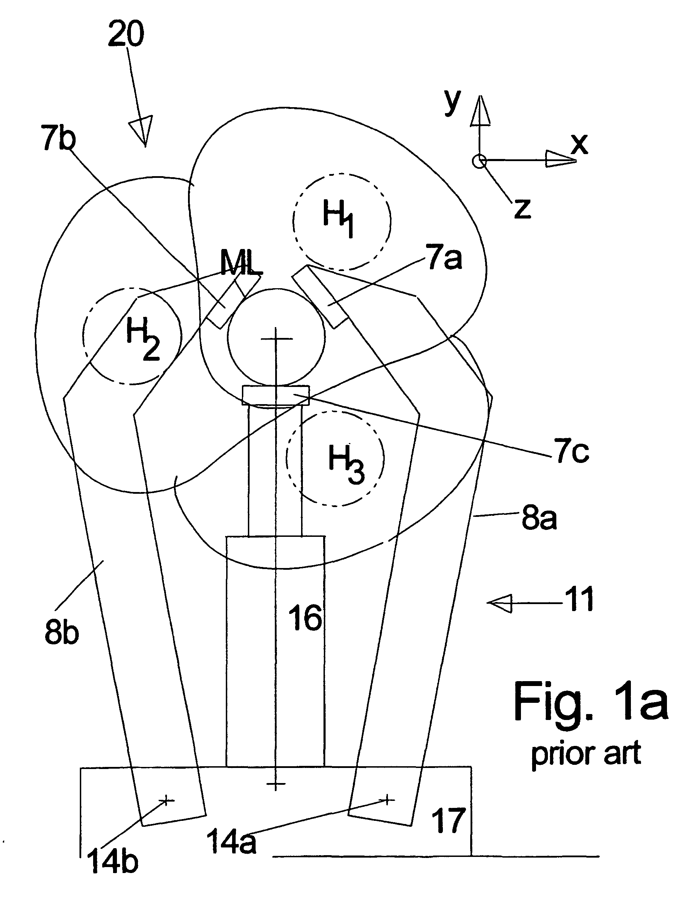

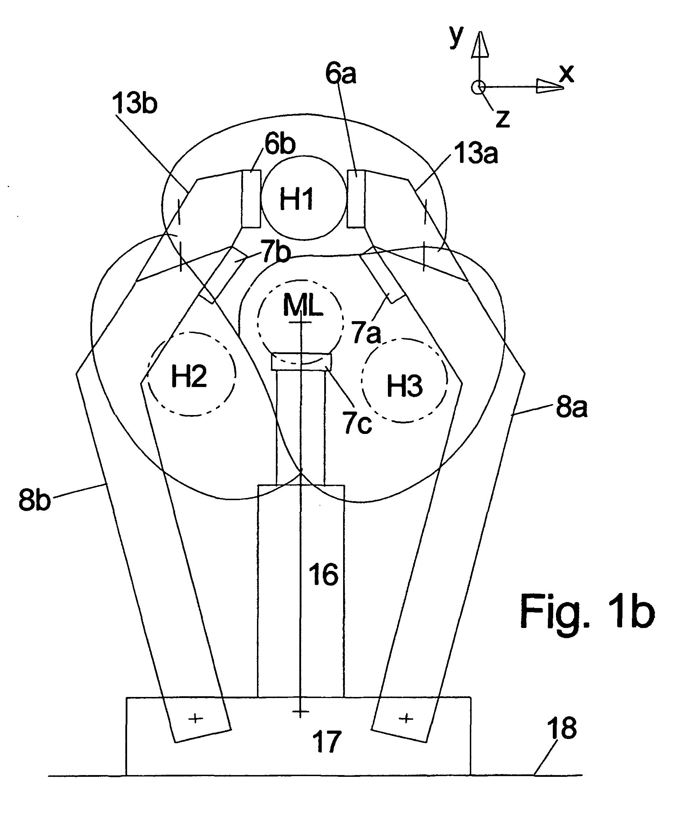

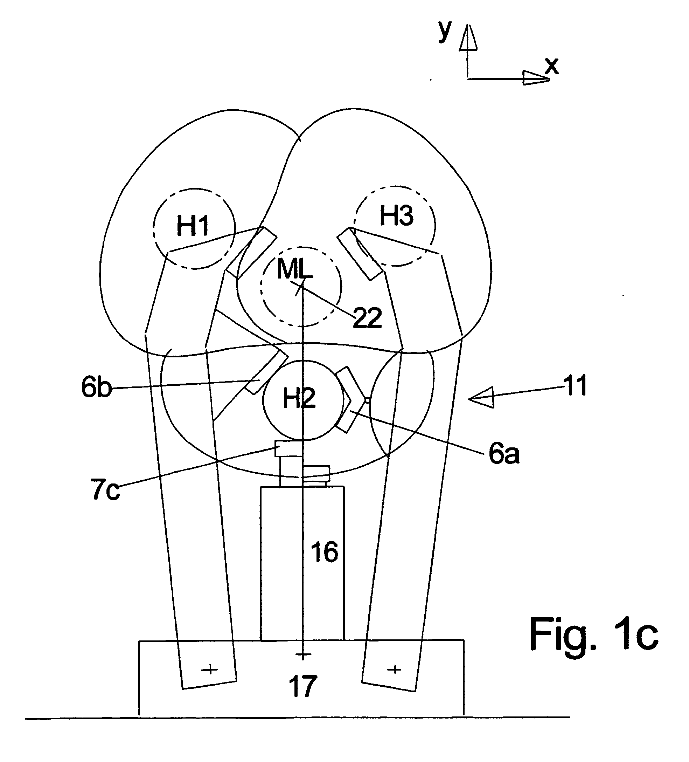

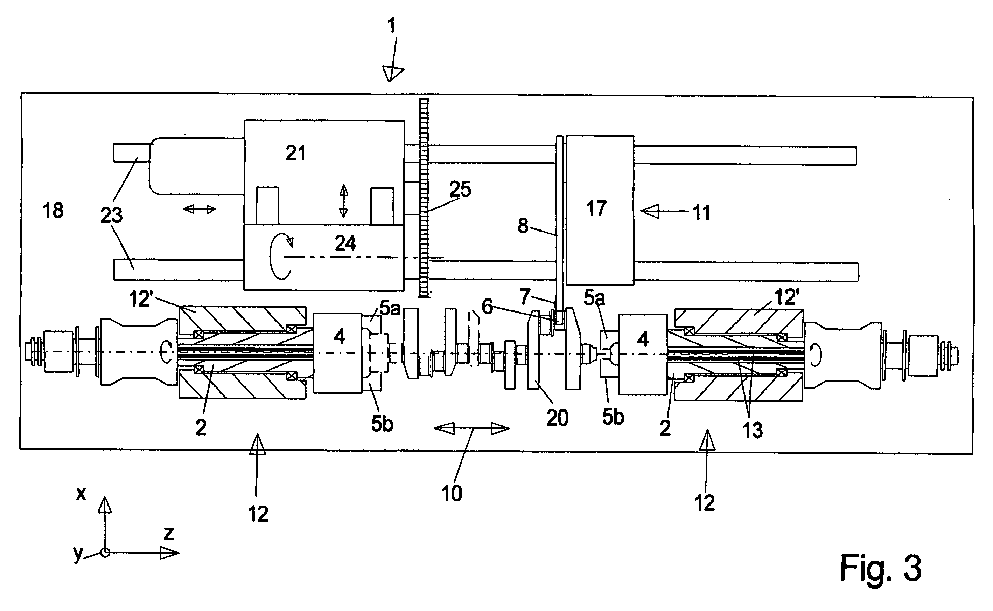

Damit das Werkstück 20 eine exakt definierte Drehlage um die C-Achse vor Beginn der Bearbeitung einnimmt, zeigt Fig. 3 den Ausrichtezustand, in dem das Werkzeug 25 außer Eingriff gebracht ist und die Lünette 11 mit den erfindungsgemäß zusätzlich daran angeordneten Richtbacken 6 eine der exzentrisch zur Drehachse des Werkstückes 20 liegende Hublagerstelle (H1, H2 ...) ergreift und durch spielfreie Anlage zwischen den Richtbacken 6a, b hinsichtlich der Drehlage positioniert, wie dies am besten in den Detaildarstellungen der Fig. 1, betrachtet in Z-Richtung, zu erkennen ist:

Als Werkstück 20 ist dabei wiederum eine Kurbelwelle eingezeichnet, die auf der Achse ihrer Mittellager ML gespannt ist, und deren Mittellager mit den exzentrisch hierzu angeordneten Hauptlagem H1, H2, H3 über die Wangen miteinander verbunden sind. Die Hauptlager H1, H2, H3 sind - wie bei Kurbelwellen üblich und in den Fig. 2 und 3 zu erkennen - bezüglich der Positionen der Mittellager ML als auch zueinander in Längsrichtung versetzt.

Fig. 1 a zeigt die konventionelle Bauform und den konventionellen Einsatz einer Lünette 11:

Dabei ragen von einem Sockel 17 beidseits des abzustützenden Mittellagers ML meist nach außen gekröpfte Arme 8a, b in Richtung des Mittellagers ML und umgreifen diesen, so dass nach Verschwenken der Arme 8a um ihre Schwenkpunkte 14a, b im Sockel 17 die Arme 8a, b mit ihren Stützbacken 7a, b um 120° zueinander versetzt von schräg außen gegen die Umfangsfläche des Mittellagers ML drücken.

Auf der zum Sockel 17 hin gewandten Innenseite wird das Mittellager ML durch eine dritte Stützbacke 7c gestützt, die an der Stirnfläche eines Mittelstempels 16, also eines Hydraulikkolbens, befestigt ist, welcher vom Sockel 17 aus mittig gegen das Mittellager ML, also die Drehachse der Werkzeugmaschine, ausfahrbar ist.

Fig. 1b zeigt demgegenüber das erfindungsgemäße Ausrichten des Werkstückes 20 mit Hilfe einer erfindungsgemäßen Positioniervorrichtung.

Dabei befindet sich die Lünette 11 an der Längsposition eines definierten Hauptlagers (z. B. H1), welches sich in der bezüglich der Drehmitte 22 von der vom Bett 18 und damit dem Sockel 17 abgewandten Position befindet. Die normalen Stützbacken 7a, b, c, auch des ausgefahrenen Mittelstempels 16, liegen daher nicht an diesem Mittellager ML an, da ein solches an der gleichen Längsposition wie das zum Positionieren benutzte Hauptlager H1 nicht vorhanden ist.

Die Arme 8a, b der Lünette 11 sind um einen Richtfortsatz 13a, b jeweils etwa in ihrer Erstreckungsrichtung über ihr bisheriges freies Ende hinaus verlängert und tragen auf der dem Hublager H1 zugewandten Innenseite jeweils eine Richtbacke 6a, b, vorzugsweise in solcher Positionierung, dass sich im geschlossenen, am Hublager H1 anliegenden, Zustand die Richtbacken 6a, b einander diametral gegenüberliegen.

Der Richtfortsatz 13a bzw. b ist dabei vorzugsweise lösbar an dem Arm 8a bzw. b befestigt, und kann vorzugsweise demgegenüber justiert werden, insbesondere in X-Richtung, aber ggf. auch zusätzlich in Z-Richtung, sofern dies notwendig sein sollte.

Gemäß der Fig. 3 sind Richtbacke 6a und Stützbacke 7a zwar in Z-Richtung auf der gleichen Position in Z-Richtung angeordnet, jedoch ist es auch denkbar, dass Richtbacke 6a und Stützbacke 7a zueinander in Z-Richtung versetzt an der Lünette angeordnet sind, beispielsweise um den Abstand eines Mittellagers ML zu einem angrenzenden Hublager H1, wodurch u.U. auch die Verfahrbarkeit der gesamten Lünette, also insbesondere ihres Sockels 17, in Z-Richtung verzichtbar ist.

Die Richtbacken 6a, b können an den Richtfortsätzen 13a, b starr oder verschwenkbar, insbesondere verschwenkbar um eine parallel zur Z-Achse gerichtete Achse oder um eine in Y-Richtung liegende Achse, ausgebildet sein.

Zusätzlich können die Richtbacken 6a, b mit einer ebenen Anlagefläche, wie in Fig. 1 b dargestellt, ausgestattet sein oder mit einer konkav prismenförmigen Anlagefläche, wie in Fig. 1 c dargestellt.

Fig. 1 c zeigt eine Ausführungsform, bei der die Richtbacken 6a, b zwischen den Stützbacken 7a, b und dem Schwenkpunkt 13 an dem Arm 8a, b angeordnet sind, so dass sie in der Lage sind, einen solchen Hublagerzapfen z. B. H2 auszurichten, der sich von der Mittelachse 22 der Kurbelwelle aus auf der dem Bett 18 und damit dem Sockel 17 zugewandten Seite befindet.

Wenn dabei der Hublagerzapfen z. B. H2 ― wie anhand des rechten Teiles der Fig. 1c dargestellt - von den beiden Richtbacken z. B. 6a diametral einander gegenüberliegend aufgenommen ist, muss hierfür zusätzlich der Mittelstempel 16 der Lünette 11 außer Funktion setzbar sein oder die Richtbacken derart ausgebildet sein, daß der Mittelstempel das Werkstück nicht erreichen kann, bevor die Richtbacken das Werkstück erreichen.

Wenn der Mittelstempel 16 mit seinem mittigen Stützbacken 7c auch für das Ausrichten in Richtung Drehmitte 22 ausfährt - wie in der linken Bildhälfte der Fig. 1c dargestellt - müssen auch die Richtbacken z. B. 6b den Hubzapfen H2 auf der Rückseite teilweise umgreifen, so dass die dann drei anliegenden Backen z. B. 6b, 7c wiederum um 120° zueinander versetzt am Hublagerzapfen H2 angreifen.

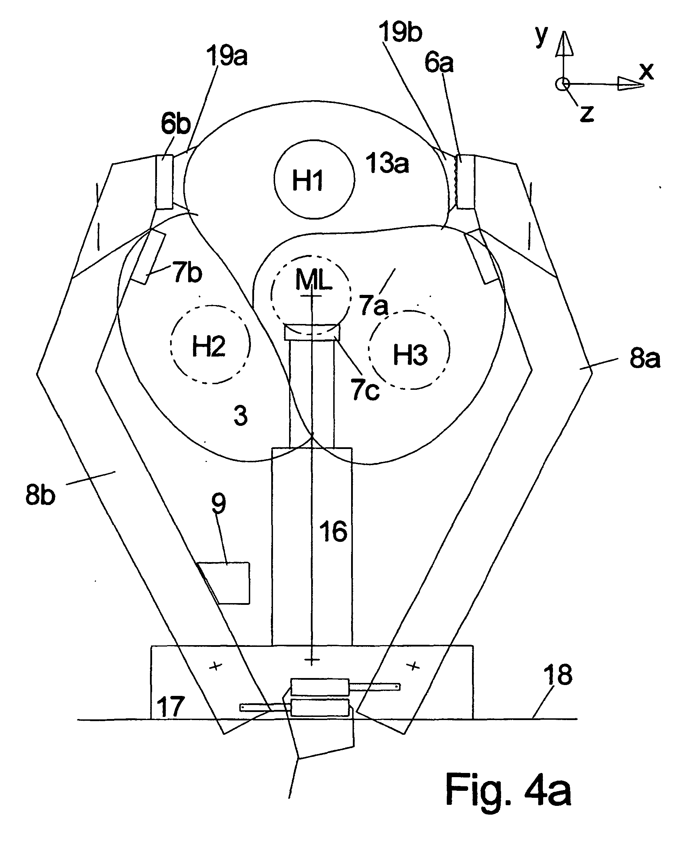

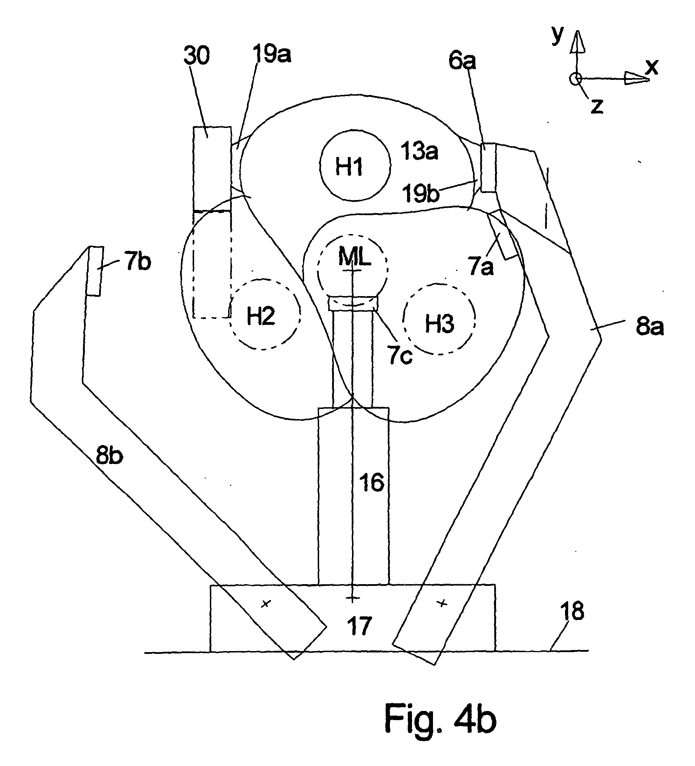

Im Gegensatz zu den Darstellungen der Fig. 1b und 1c, bei denen die Richtbacken 6a, b an einem der Hublager-Zapfen beim Ausrichten der Drehlage der Kurbelwelle anliegen, zeigen die Fig. 4a, b Lösungen, bei denen an einer der Wangen W der Kurbelwelle, exzentrisch zum Mittellager, meist auf oder unterhalb der Höhe eines der Hublager, diametral voneinander wegweisend Positionierflächen 19a, b ausgebildet sind, von denen wenigstens eine (19a) bearbeitet ist und in Z-Richtung, insbesondere in Z-Y-Richtung, verläuft, während die andere Positionierfläche 19b vorzugsweise unbearbeitet ist. Die Positionierflächen 19a, b sind vorzugsweise in Form von Erhebungen über die normale Kontur der Wange W hinaus beim Schmieden oder Gießen angeformt.

Bei der Lösung gemäß Fig. 4a dient der Lünettenarm 8b mit seiner Richtbacke 6b als Festanschlag für die dagegen zu drückende Positionierfläche 19a der Kurbelwelle. Dies wird erreicht, indem dieser Lünettenarm 8b seinerseits gegen einen Primäranschlag 9 gedrückt wird, der sich in diesem Fall auf der gleichen Seite des Lünettenarmes 8b befindet wie die Positionierfläche 19a der Kurbelwelle.

Der Primäranschlag 9 muss für die normale Stützfunktion der Lünette außer Eingriff mit diesem Lünettenarm 8b bringbar sein, beispielsweise durch Längsverschiebung in Z-Richtung entlang des Sockels 17 der Lünette oder auf andere Art und Weise.

Der andere Lünettenarm 8a drückt mit seiner Richtbacke 6a gegen die andere Positionierfläche 19b, die auch unbearbeitet sein kann, und dadurch die Kurbelwelle mit der bearbeiteten Positionierfläche 19a gegen die in fester Position stehende Richtbacke 6b. Dies ist immer dann gewährleistet, solange der als Festanschlag dienende Lünettenarm 8b mit größerer Kraft beaufschlagt ist, als der andere Lünettenarm, also die sichere Anlage an den Festanschlag 9 gewährleistet ist. Dies kann bei hydraulischer Beaufschlagung der Lünettenarme durch unterschiedliche Ansatzpunkte der diese beaufschlagende Hydraulikzylinder bei gleicher zentraler Druckversorgung oder durch unterschiedliche Kolbenquerschnitte dieser Hydraulikkolben etc. erreicht werden.

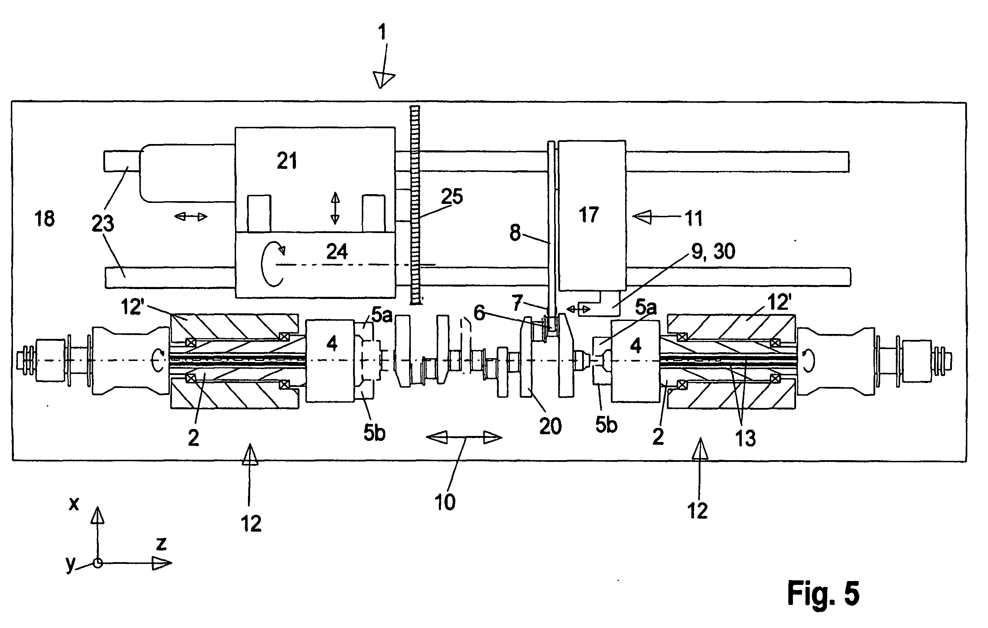

Die Verschiebbarkeit des Festanschlages 9 in Z-Richtung ist beispielsweise in der Aufsicht auf die Maschine gemäß Fig. 5 dargestellt.

Ebenso ist es möglich, nicht einen der beiden Lünettenarme 8a,b als Festanschlag zum Zusammenwirken mit einer der Positionierflächen 19a,b, die vorzugsweise an einer Wange W der Kurbelwelle angeordnet sein können, zu verwenden, sondern einen separaten Festanschlag 30, der beispielsweise an dem Sockel 17 der Lünette befestigt, insbesondere beweglich befestigt, sein kann, um in der normalen Stützfunktion der Lünette diesen Festanschlag 30 aus dem Arbeitsbereich der Lünette zu bringen. Auch hier ist beispielsweise eine Verfahrung in Z-Richtung gegenüber dem Sockel 17 denkbar, wie in Fig. 5 alternativ eingezeichnet, aber auch eine Verschwenkbarkeit, Klappbarkeit oder ähnliches um eine vorzugsweise parallel zur Z-Richtung liegende Schwenkachse gegenüber dem Sockel 17.

In diesem Fall muss also wie ersichtlich die Kurbelwelle grob so vorpositioniert werden, dass der Festanschlag 30 in Richtposition gebracht werden kann, also in den Wirkungsbereich der vorzugsweise bearbeiteten Positionierfläche 19a. Anschließend wird lediglich der dem Festanschlag 30 gegenüberliegende Lünettenarm 8a mit seiner Richtfläche 6a mit Druck beaufschlagt und drückt gegen die andere Positionierfläche 19b und damit die Kurbelwelle in die durch den Festanschlag 30 definierte Position.

Der auf Seiten des Festanschlages 30 angeordnete Lünettenarm 8b dagegen wird vorzugsweise nicht mit Kraft beaufschlagt, ist jedenfalls nicht gegen die Kurbelwelle angelegt und außer Funktion, was bei bestehender Druckbeaufschlagung auch durch einen Sperrbolzen, der auch mit dem Festanschlag 30 funktionsvereinigt sein kann, bewirkt werden kann.

In diesem Fall können auch während des Ausrichtens beide Lünettenarme 8a, b vom selben Arbeitsdruck versorgt werden.

### BEZUGSZEICHENLISTE

- 1: Werkzeugmaschine
- 2: Werkstück-Spindel
- 3: Spindel-Motor
- 4: Spannfutter
- 5: Spannbacke
- 6a,b: Richtbacken
- 7a,b: Stützbacken
- 8a,b: Arm
- 9: Primäranschlag
- 10: Längsrichtung
- 11: Lünette
- 12: Spindelstock
- 12': Gehäuse
- 13a,b: Richtfortsatz
- 14a,b: Schwenkpunkt
- 15 16: Mittelstempel
- 17: Sockel
- 18: Bett
- 19: Positionierfläche
- 20: Kurbelwelle
- 21: Längsschlitten
- 22: Drehmitte
- 23: Längsführung
- 24: Querschlitten
- 25: Scheibenfräser
- 30: Festanschlag
- 31 ML: Mittellager
- H1,2,3: Hublager
- C: C-Achse
- W: Wange

## Patentansprüche

1. Positioniervorrichtung für nicht zentrische Werkstücke (20) in Werkzeugmaschinen (1), insbesondere in Drehmaschinen, Fräsmaschinen oder Drehfräsmaschinen mit wenigstens einem relativ zum Werkstück beweglichen, exzentrisch angreifenden Richtbacken (6),
**dadurch gekennzeichnet, dass**
der wenigstens eine Richtbacken (6) an einer Lünette (11) angeordnet ist.

2. Positioniervorrichtung nach Anspruch 1,
**dadurch gekennzeichnet, dass**
der Richtbacken (6) am quer zur Längsrichtung (10) des Werkstückes (20) verschwenkbaren Arm einer Lünette (11) angeordnet ist.

3. Positioniervorrichtung nach einem der vorhergehenden Ansprüche,
**dadurch gekennzeichnet, dass**
je ein Richtbacken (6a,b) an je einem der beiden verschwenkbaren Arme (8a,b) der Lünette (11) angeordnet ist.

4. Positioniervorrichtung nach einem der vorhergehenden Ansprüche,
**dadurch gekennzeichnet, dass**
die Lünette (11) in Längsrichtung (10) (Z-Richtung) verfahrbar ist.

5. Positioniervorrichtung nach einem der vorhergehenden Ansprüche,
**dadurch gekennzeichnet, dass**
die Richtbacken (6a,b) diametral einander gegenüber liegend am Werkstück (20) angreifen, insbesondere an den Hublagerzapfen einer auf der Hauptlagerachse gespannten Kurbelwelle als Werkstück.

6. Positioniervorrichtung nach einem der vorhergehenden Ansprüche,
**dadurch gekennzeichnet, dass**
die Richtbacken (6a,b) an dem freien, über die Stützbacken (7a,b) hinausragenden, Ende der Arme der Lünette (11) als Richtfortsatz (13a,b) angeordnet, insbesondere lösbar angeordnet sind.

7. Positioniervorrichtung nach einem der vorhergehenden Ansprüche,
**dadurch gekennzeichnet, dass**
die Richtbacken (6a,b) in Längsrichtung und/oder Querrichtung und/oder Winkelstellung bezüglich der Erstreckung der Arme (8a,b) gegenüber diesen Arme (8a,b) der Lünette (11) einstellbar sind.

8. Positioniervorrichtung nach einem der vorhergehenden Ansprüche,
**dadurch gekennzeichnet, dass**
die Richtbacken (6a,b) in ihrer Winkellage - schwenkbar um die Z-Achse und/oder eine Querachse zur Z-Achse - bezüglich der Anlagefläche am Werkstück (20) selbst zentrierend und verschwenkbar sind.

9. Positioniervorrichtung nach einem der vorhergehenden Ansprüche,
**dadurch gekennzeichnet, dass**
die Richtbacken (6a,b) zwischen den Stützbacken (7a,b) und dem Schwenkpunkt (14a,b) der Arme (8a,b) der Lünette (11) angeordnet sind und insbesondere von schräg oben gegen die auszurichtende Hublagerstelle anlegbar sind.

10. Positioniervorrichtung nach einem der vorhergehenden Ansprüche,
**dadurch gekennzeichnet, dass**
die Richtbacken (6a,b) identisch mit den Stützbacken (7a,b) sind.

11. Werkzeugmaschine mit einer Positioniervorrichtung gemäß einem der vorhergehenden Ansprüche.

12. Verfahren zum Positionieren einer auf der Achse der Mittellager in einer Werkzeugmaschine gehaltenen Kurbelwelle als Werkstück (20) um die C-Achse mittels einer sowohl Richtbacken (6a,b) als auch Stützbacken (7a,b) aufweisenden Lünette (11),
**dadurch gekennzeichnet, dass**
- die Kurbelwelle (20) grob in die richtige Drehlage vorpositioniert in die Maschine, insbesondere gehalten zwischen Spitzen, eingesetzt wird,
- die Lünette (11) in Z-Richtung von der Stützposition in die Richtposition gebracht wird und
- die Arme der Lünette (11) in die geschlossene Richt-Position verschwenkt werden.

13. Verfahren nach Anspruch 12,
**dadurch gekennzeichnet, dass**
vor dem Schließen der Lünette (11) deren Mittelstempel (16) außer Funktion gesetzt wird.

14. Verfahren nach Anspruch 12 oder 13,
**dadurch gekennzeichnet, dass**
die Arme der Lünette (11) in der geschlossenen Position in Anlage an den Hublagerzapfen (z.B. H1) gebracht werden.

15. Verfahren nach einem der Ansprüche 12 bis 14,
**dadurch gekennzeichnet, dass**
die Arme der Lünette (11) in der geschlossenen Position in Anlage an die wenigstens eine Positionierfläche (19) der Wange W gebracht werden.

## Claims

1. Positioning device for eccentric workpieces (20) in machine tools (1), in particular in lathes, or milling machines, with at least a guide rod (6) with eccentric clamping, mobile relative to the workpiece, **characterized in that** at least one guide rod (6) is arranged on a steady rest (11).

2. Positioning device according to claim 1, **characterized in that** the guide rod (6) is arranged on a lever of a steady rest (11), transversally slewing with respect to the longitudinal direction (10) of the workpiece (20).

3. Positioning device according to one of the preceding claims, **characterized in that** a guide rod (6a, b) is arranged on each of the two swinging levers (8a, b) of the steady rest (11).

4. Positioning device according to one of the preceding claims, **characterized in that** the steady rest (11) can be shifted in the longitudinal direction (10) (Z direction).

5. Positioning device according to one of the preceding claims, **characterized in that** the guide rods (6a, b) clamp at the workpiece (20) from diametrically opposed directions, in particular at the connecting-rod bushing plug of a crankshaft as workpiece, secured on the crank bearing axis.

6. Positioning device according to one of the preceding claims, **characterized in that** the guide rods (6a, b) are arranged, in particular separable arranged, on the free end of the levers of the steady rest (11) protruding above the support jaws (7a, b) as guide extensions (13a, b).

7. Positioning device according to one of the preceding claims, **characterized in that** the guide rods (6a, b) are controllable in the longitudinal direction and/or in the transversal direction and/or in the angular position relative to the extension of levers (8a, b), with respect to these levers (8a, b) of the steady rest (11).

8. Positioning device according to one of the preceding claims, **characterized in that** the guide rods (6a, b) are slewing and self-centring as to their angular position - slewing around the Z axis and/or around a transversal axis with respect to the Z axis - relative to the setting surface on the workpiece (20).

9. Positioning device according to one of the preceding claims, **characterized in that** the guide rods (6a, b) are arranged between the support jaws (7a, b) and the slewing points (14a, b) of the levers (8a, b) of the steady rest (11), and in particular they can be arranged obliquely from above towards the connecting-rod bushing point to be controlled.

10. Positioning device according to one of the preceding claims, **characterized in that** the guide rods (6a, b) are the same with the support jaws (7a, b).

11. Machine tool with a positioning device according to one of the preceding claims.

12. Method for positioning around the C axis a crankshaft secured as workpiece (20) on the intermediate bearing axis in a machine tool by means of a steady rest (11) having both guide rods (6a, b) and support jaws (7a, b), **characterized in that**
- the crankshaft (20) is approximately introduced in the machine, pre-positioned in the correct angular position, in particular held between centres,
- the steady rest (11) is brought along the Z direction from the support position to the guide position and
- the levers of the steady rest (11) are swung in the closed guide position.

13. Method according to claim 12, **characterized in that** before closing the steady rest (11), its central stem (16) is put out of action.

14. Method according to claim 12 or 13, **characterized in that** when closed, the levers of the steady rest (11) are brought into contact on the connecting-rod bushing plug (for example H1).

15. Method according to claims 12 through 14, **characterized in that** when closed, the levers of the steady rest (11) are brought into contact on at least one positioning surface (19) of the stringer W.

## Revendications

1. Dispositif de positionnement pour pièces à usiner (20) excentriques sur machines-outils (1), spécialement tours, machines à fraiser ou machines à fraiser rotatives, avec au moins une mâchoire de guidage (6) à fixation excentrique, mobile par rapport à la pièce à usiner, **caractérisé en ce que**, cette, au moins une mâchoire de guidage (6) est disposée sur une lunette (11).

2. Dispositif de positionnement selon la revendication 1, **caractérisé en ce que**, la mâchoire de guidage (6) est disposée sur le bras d'une lunette (11), pivotant transversalement à l'égard de la direction longitudinale (10) de la pièce à usiner (20).

3. Dispositif de positionnement selon l'une des revendications antérieures, **caractérisé en ce que**, sur chacun d'entre les deux bras (8a, b) pivotants de la lunette (11) est disposée à raison d'une mâchoire de guidage (6a, b).

4. Dispositif de positionnement selon l'une des revendications antérieures, **caractérisé en ce que**, la lunette (11) est déplaçable dans la direction longitudinale (10) (direction Z).

5. Dispositif de positionnement selon l'une des revendications antérieures, **caractérisé en ce que**, les mâchoires de guidage (6a, b) empoignent la pièce à usiner (20) sur deux directions diamétralement opposées, spécialement sur le maneton du palier de bielle d'un vilebrequin, comme pièce à usiner, fixée sur l'axe du palier principal.

6. Dispositif de positionnement selon l'une des revendications antérieures, **caractérisé en ce que**, les mâchoires de guidage (6a, b) sont disposées, spécialement disposées de manière détachable sur l'extrémité libre des bras de la lunette (11), sorties en dehors au-dessus des mâchoires d'appui (7a, b), comme prolongement de guidage (13a, b).

7. Dispositif de positionnement selon l'une des revendications antérieures, **caractérisé en ce que**, les mâchoires de guidage (6a, b) sont réglables en direction longitudinale et/ou en direction transversale et/ou en position angulaire par rapport à l'étendue des bras (8a, b), à l'égard de ces bras (8a, b) de la lunette (11).

8. Dispositif de positionnement selon l'une des revendications antérieures, **caractérisé en ce que**, les mâchoires de guidage (6a, b) sont pivotantes à autocentrage en ce qui concerne leur position angulaire - pivotantes autour l'axe Z et/ou autour un axe transversal à l'égard de l'axe Z - par rapport à la surface de portée sur la pièce à usiner (20).

9. Dispositif de positionnement selon l'une des revendications antérieures, **caractérisé en ce que**, les mâchoires de guidage (6a, b) sont disposées entre les mâchoires d'appui (7a, b) et le point de pivotement (14a, b) des bras (8a, b) de la lunette (11), et spécialement peuvent être positionnées obliquement d'en haut vers le logement du palier de bielle qui doit être réglé.

10. Dispositif de positionnement selon l'une des revendications antérieures, **caractérisé en ce que**, les mâchoires de guidage (6a, b) sont identiques avec les mâchoires d'appui (7a, b).

11. Machine-outil avec un dispositif de positionnement selon l'une des revendications antérieures.

12. Procédé pour le positionnement autour l'axe C d'un vilebrequin tenu comme pièce à usiner (20) sur l'axe du palier intermédiaire d'une machine-outil, par l'intermédiaire d'une lunette (11) présentant tant des mâchoires de guidage (6a, b) que des mâchoires d'appui (7a, b), **caractérisé en ce que**,
- le vilebrequin (20) est introduit approximativement dans la machine, positionné en préalable dans la position angulaire correcte, spécialement fixé entre les becs à centrer,
- la lunette (11) est amenée en direction Z à partir de la position d'appui dans la position de guidage et
- les bras de la lunette (11) sont pivotés dans la position de guidage fermée.

13. Procédé selon la revendication 12, **caractérisé en ce que**, avant la fermeture de la lunette (11), le poinçon central (16) de celle-ci est désengrené.

14. Procédé selon la revendication 12 ou 13, **caractérisé en ce que**, en position fermée, les bras de la lunette (11) sont amenés en contact sur le maneton de palier de bielle (par exemple H1).

15. Procédé selon les revendications 12 à 14 **caractérisé en ce que**, en position fermée, les bras de la lunette (11) sont amenés en contact sur la surface de positionnement (19), au moins l'une, du côté W.
